# EUROPÄISCHE PATENTSCHRIFT

(11) **EP 1 784 323 B1**
(45) Veröffentlichungstag und Bekanntmachung des Hinweises auf die Patenterteilung: **19.03.2008**
(21) Anmeldenummer: 05757358.6
(22) Anmeldetag: 01.07.2005
(51) Int. Cl.: B60R 25/02

(54) **ELEKTRONISCHE LENKUNGSVERRIEGELUNG**
ELECTRONIC STEERING LOCK
SYSTEME DE BLOCAGE DE DIRECTION ELECTRONIQUE

(30) Priorität: 27.08.2004 DE 102004041869
(43) Veröffentlichungstag der Anmeldung: 16.05.2007
(73) Patentinhaber: Huf Hülsbeck & Fürst GmbH & Co. KG, 42551 Velbert (DE)
(72) Erfinder: SCHINDLER, Mirko, 42549 Velbert (DE); VAN DEN BOOM, Andreas, 45309 Essen (DE); SCHUMACHER, Helmut, 48653 Coesfeld (DE); WEBER, Franz-Josef, 40699 Erkrath (DE); VAUPEL, Rainer, 45527 Hattingen (DE)
(74) Vertreter: Schmidt, Frank-Michael
(86) Internationale Anmeldenummer: PCT/EP2005/007116
(87) Internationale Veröffentlichungsnummer: WO 2006/024336

(56) Entgegenhaltungen:
- EP-A- 1 359 070
- DE-A1- 4 337 545
- US-A1- 2004 069 027

## Beschreibung

Die Erfindung betrifft eine elektronische Lenkungsverriegelung mit einer Spannungsvorsorgungssteuereinheit und einer Verriegelungsbaugruppe, wobei die Spannungsversorgungssteuereinheit die Spannungsversorgung für die Verriegelungsbaugruppe über eine Masse-Versorgungsleitung und eine Versorgungsspannungsleitung zur Verfügung stellt, wobei die Verriegelungsbaugruppe von der Spannungsversorgungssteuereinheit nur dann mit der Versorgungsspannung und Masse versorgt wird, wenn auf einer Zündungsversorgungsleitung (Klemme 15) eine Spannung gegenüber Masse anliegt, die eine ausgeschaltete Zündung anzeigt, wobei die Verriegelungsbaugruppe einen Verriegelungsmotor aufweist und diesen mit der Versorgungsspannung und der Masse versorgt.

Die Spannungsversorgungssteuereinheit ist so ausgebildet, daß sie die Verriegelungsbaugruppe stromlos schaltet (d.h. weder mit Versorgungsspannung noch mit Masse versorgt), wenn das Zündschloß und die Zündung eingeschaltet sind. Dies ist üblicherweise während der Fahrt der Fall. Eine Schaltung zum Stromlosschalten einer Lenkungsverriegelung, wie sie beispielsweise in der Spannungsversorgungssteuereinheit Anwendung finden kann, ist in der Patentschrift DE 199 62 180 C1 beschrieben. Die bekannte Schaltungsanordnung enthält zwei parallel arbeitende Controller, die beide sowohl eine Ansteuerschaltung zum Versorgen einer Lenkungsverriegelung mit Masse als auch eine Ansteuerschaltung zum Versorgen der Lenkungsverriegelung mit der Versorgungsspannung ansteuern. Die Controller empfangen als Eingangssignale Signale von Schaltern am Zündstartschloß. Darüber hinaus ist ein Eingang der Controller mit der sogenannten Klemme 15, d.h. der Zündungsversorgungsleitung, gekoppelt. Die Controller sind so programmiert, daß sowohl die Versorgungsspannung als auch die Masse nur dann der Lenkungsverriegelung zur Verfügung gestellt werden, wenn - als eine der Bedingungen - die Zündung (Klemme 15) ausgeschaltet ist (auf Masse liegt) und das Zündschloß ausgeschaltet ist.

Ausgehend von einem solchen Stand der Technik ist es Aufgabe der Erfindung, die Zuverlässigkeit des Stromlos-Schaltens des Verriegelungsmotors der Lenkungsverriegelung zu erhöhen, insbesondere die Wahrscheinlichkeit zu verringern, daß - aufgrund mehrfacher Fehler und Ausfälle - der Verriegelungsmotor versehentlich mit Masse beaufschlagt wird.

Diese Aufgabe wird erfindungsgemäß durch eine elektronische Lenkungsverriegelung mit den Merkmalen des Patentanspruchs 1 gelöst.

EP 1 359 070 A1 beschreibt eine andere bekannte Elektronische Lenkungsverriegelung mit einer Spannungsversorgungssteuereinheit und einer Verriegelungsbaugruppe, wobei die Spannungsversorgungssteuereinheit die Spannungsversorgung für die Verriegelungsbaugruppe über eine Masse-Versorgungsleitung und eine Versorgungsspannungsleitung zur Verfügung stellt, wobei die Verriegellungsbaugruppe von der Spannungsversorgungssteuereinheit nur dann mit der Versorgungsspannung und Masse versorgt wird, wenn auf einer Zündungsversorgungsleitung eine Spannung gegenüber Masse anliegt, die eine ausgeschaltete Zündung anzeigt, wobei die Verriegelungsbaugruppe einen Verriegelungsmotor aufweist nd diesen mit der Versorgungsspannung und der Masse versorgt, wobei die Masse-Versorgung des Verriegelungsmotors über eine Masse-Versorgungs-Schalteinrichtung zur Verfügung gestellt wird.

Die elektronische Lenkungsverriegelung weist eine Spannungsversorgungssteuereinheit und eine Verriegelungsbaugruppe auf. Die Spannungsversorgungssteuereinheit stellt die Spannungsversorgung für die Verriegelungsbaugruppe über eine Masse-Versorgungsleitung und eine Versorgungsspannungsleitung zur Verfügung. Hierbei sei angemerkt, daß die Versorgungsleitung (sowohl Masse als auch Versorgungsspannung) auch mehrere parallele und jeweils einheitlich angesteuerte Leitungen umfassen kann. Die Verriegelungsbaugruppe wird von der Spannungsversorgungssteuereinheit nur dann mit der Versorgungsspannung und Masse versorgt, wenn auf einer Zündungsversorgungsleitung (Klemme 15) eine Spannung gegenüber Masse anliegt, die eine ausgeschaltete Zündung anzeigt (d.h. üblicherweise 0 Volt). Selbstverständlich kann auch eine Spannung ungleich Null gegenüber Masse anliegen, die dennoch eine ausgeschaltete Zündung kennzeichnet, insbesondere eine geringfügige Potentialdifferenz gegenüber Masse aufgrund parasitärer Einflüsse. Die Verriegelungsbaugruppe weist einen Verriegelungsmotor auf und versorgt diesen mit der Versorgungsspannung und der Masse. Der Verriegelungsmotor kann sowohl ein translatorischer Stellmotor als auch ein einen Rotor umfassender Motor sein. Der Motor ist mit irgendeinem Getriebe gekoppelt, das bei entsprechender Ansteuerung durch den Motor für eine Verriegelung oder Entriegelung der Lenkung sorgt (beispielsweise durch mechanischen Eingriff in die Lenksäule). Diese Verriegelung ist dabei so ausgebildet, daß sie im entriegelten oder auch verriegelten Zustand verbleibt, wenn der Motor nicht betätigt wird. Die Verriegelungsbaugruppe versorgt den Verriegelungsmotor mit der Versorgungsspannung und der Masse üblicherweise über zwischengeschaltete Schalteinrichtungen, die von zugehörigen Steuereinrichtungen (und beispielsweise einem Mikrocontroller) angesteuert werden. Bei der erfindungsgemäßen elektronischen Lenkungsverriegelung wird die Masse-Versorgung des Verriegelungsmotors über eine Masse-Versorgungs-Schalteinrichtung zur Verfügung gestellt, wobei die Verriegelungsbaugruppe eine Steuerschaltung umfaßt, die die Masse-Versorgungs-Schalteinrichtung ansteuert. Erfindungsgemäß weist die Steuerschaltung einen zusätzlichen Eingangsanschluß auf, an dem ein von der Zündungsversorgungsleitung (Klemme 15) abgeleitetes Steuersignal anliegt. Wenn die Spannung an dem zusätzlichen Eingangsanschluß (d.h. das abgeleitete Steuersignal) eine eingeschaltete Zündung anzeigt, erzeugt die Steuerschaltung ein die Masse-Versorgungs-Schalteinrichtung öffnendes Ansteuersignal, so daß der Verriegelungsmotor auch dann, wenn in diesem Fall (fehlerhaft) die Masse von der Spannungsversorgungssteuereinheit an die Verriegelungsbaugruppe zur Verfügung gestellt werden sollte, diese Masse-Versorgung nicht an den Verriegelungsmotor weitergeleitet wird. Die zusätzliche Steuerschaltung, die das abgeleitete Steuersignal empfängt, schafft eine zusätzliche Sicherheit beim Abschalten der Spannungs/Masse-Versorgung der Lenkungsverriegelung. Das zusätzliche Heranführen eines von der Zündungsversorgungsleitung abgeleiteten Steuersignals an die Verriegelungsbaugruppe ermöglicht aufgrund der dadurch geschaffenen zusätzlichen Sicherheit eine einfachere Ausführung der Spannungsversorgungssteuereinheit. Beispielsweise sind Ausführungsformen denkbar, bei denen anstelle zweier redundanter Controller in der Spannungsversorgungssteuereinheit (wie sie beispielsweise in der eingangs genannten bekannten Anordnung verwendet werden) nur ein Controller eingesetzt wird, was die Kosten der Gesamtanordnung verringert.

Bei einer bevorzugten Ausführungsform der erfindungsgemäßen Lenkungsverriegelung befindet sich das von der Zündungsversorgungsleitung abgeleitete Steuersignal auf einem niedrigen Spannungspegel, vorzugsweise auf Masse, wenn die Zündungsversorgungsleitung auf einem hohen Spannungspegel, beispielsweise auf 12 Volt liegt. Die Steuerschaltung erzeugt das die Masse-Versorgungs-Schalteinrichtung öffnende Ansteuersignal somit dann, wenn der zusätzliche Eingangsanschluß auf einer niedrigen Spannung liegt. Diese Ausführungsform benutzt eine invertierende Schaltung zur Ableitung des abgeleiteten Steuersignals aus der Zündungsversorgungsleitung. Die Ausführungsform hat den Vorteil, daß dann, wenn die mit dem zusätzlichen Eingangsanschluß gekoppelte Leitung, die normalerweise das abgeleitete Steuersignal führt, versehentlich auf Masse liegt, die Masse-Versorgung des Verriegelungsmotors unterbrochen wird. Bei einer bevorzugten Weiterbildung dieser Ausführungsform erzeugt die Steuerschaltung das die Masse-Versorgungs-Schalteinrichtung öffnenden Ansteuersignal auch dann, wenn der zusätzliche Eingangsanschluß unbeschaltet oder offen ist. Dies bedeutet, daß die Eingangsbeschaltung der Steuerschaltung so ausgeführt ist, daß ein Abreißen der das abgeleitete Steuersignal führenden Leitung im Ergebnis ebenfalls zu einer Ansteuerung derart führt, daß die Masse-Versorgung des Verriegelungsmotors unterbrochen wird. Das die Masse-Versorgungs-Schalteinrichtung öffnende Ansteuersignal wird bei der letztgenannten Ausführungsform somit nur dann erzeugt, wenn der zusätzliche Eingangsanschluß auf einem hohen Spannungspegel, beispielsweise auf 12 Volt, liegt.

Bei einer Weiterbildung dieser letztgenannten Ausführungsform ist vorgesehen, daß das abgeleitete Steuersignal derart erzeugt wird, daß es nicht auf dem maximalen Spannungspegel (beispielsweise 12 Volt) sondern auf einen zwischen diesem maximalen Spannungspegel und Masse liegenden Wert (beispielsweise 6 Volt) liegt, wenn die Zündung ausgeschaltet ist, d.h. Klemme 15 auf Masse liegt. In diesem Fall könnte die mit dem zusätzlichen Eingangsanschluß verbundene Eingangsschaltung der Steuerschaltung so ausgeführt sein, daß sie das die Masse-Versorgungs-Schalteinrichtung öffnende Ansteuersignal nur dann nicht erzeugt, wenn am zusätzlichen Eingangsanschluß die die ausgeschaltete Zündung anzeigende Spannung (beispielsweise 6 Volt) anliegt. Dadurch könnte auch ein versehentlicher Kurzschluß dieses Eingangsanschlusses zur maximalen Spannung (d.h. beispielsweise zu 12 Volt) nicht zu einem versehentlichen Herstellen der Masseversorgungsverbindung führen.

Bei einer Weiterbildung der Erfindung sind strombegrenzende Mittel mit dem Steuersignal gekoppelt und begrenzen im Fehlerfall einen Steuersignal-Strom auf einen vorgegebenen Wert. Durch diese Maßnahme wird eine zusätzliche Sicherheit der Lenkungsverriegelung erreicht. Der begrenzte Strom ist nicht ausreichend, um ein Anlaufen des Verriegelungsmotors zuzulassen. Entsprechende Mittel können z.B. als Schaltung an einer beliebigen Stelle des Steuersignal-Weges eingebunden sein. Die strombegrenzende Schaltung kann z.B. in oder unmittelbar hinter der Spannungsversorgungssteuereinheit oder unmittelbar vor der Verriegelungsbaugruppe (z.B. an einer Eingangsklemme) angeordnet sein.

Vorzugsweise ist die strombegrenzende Schaltung in der Steuerschaltung integriert.

Weitere vorteilhafte und/oder bevorzugte Weiterbildungen der Erfindung sind in den Unteransprüche gekennzeichnet.

Im folgenden wird die Erfindung anhand eines in der Zeichnung dargestellten bevorzugten Ausführungsbeispiels näher beschrieben. In der Zeichnung zeigt:

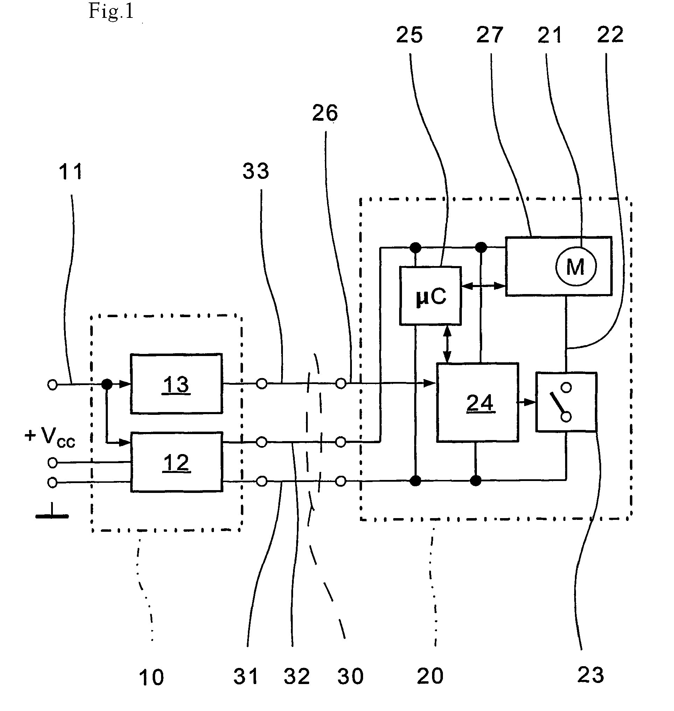

Fig. 1 ein schematisches Blockschaltbild einer erfindungsgemäßen elektronischen Lenkungsverriegelung.

Eine elektronische Lenkungsverriegelung umfaßt mechanische Komponenten, die von einem Verriegelungsmotor betätigt werden, sowie elektrische und elektronische Komponenten, die den Verriegelungsmotor in der gewünschten Weise ansteuern. Die vorliegende Erfindung betrifft primär die elektrischen und elektronischen Komponenten, so daß auf eine detaillierte Beschreibung der mechanischen Komponenten verzichtet werden soll. Die mechanischen Komponenten können in einer üblichen Weise ausgebildet sein, beispielsweise in eine Lenksäule eingreifen. Die elektrischen und elektronischen Komponenten umfassen eine Spannungsversorgungssteuereinheit und die Schaltungen der eigentlichen Verriegelungsbaugruppe. Die Verriegelungsbaugruppe bildet mit den mechanischen Komponenten in der Regel eine bauliche Einheit, die häufig als "elektronische Lenkungsverriegelung" (ELV) im engeren Sinne bezeichnet wird.

Fig. 1 zeigt eine Prinzipdarstellung der für die Erfindung wesentlichen Baugruppen. Eine Spannungsversorgungssteuereinheit 10 ist über mehrere Leitungen, die in einem Kabelbaum 30 zusammengefaßt sein können, mit der Verriegelungsbaugruppe 20 verbunden. Die Spannungsversorgungssteuereinheit 10 stellt über eine Masseleitung 31 und eine Versorgungsspannungsleitung 32 die Spannungsversorgung für sämtliche in der Verriegelungsbaugruppe 20 enthaltenen Komponenten zur Verfügung. Soll in bestimmten Betriebszuständen (beispielsweise während der Fahrt) vermieden werden, daß die Lenkungsverriegelung in irgendeiner Weise betätigt wird, so sorgt die Spannungsversorgungssteuereinheit 10 dafür, daß weder die Masse über Leitung 31 noch die Versorgungsspannung über Leitung 32 der Verriegelungsbaugruppe 20 zur Verfügung gestellt werden. Um sicherzustellen, daß nicht über irgendwelche anderen Pfade eine Masse oder eine Versorgungsspannung zu der Verriegelungsbaugruppe 20 gelangen können, stellen die Versorgungsleitungen aus der Spannungsversorgungsteuereinheit 10 die einzigen Versorgungsleitungen dar, die zu der Verriegelungsbaugruppe 20 führen. Die Versorgung der Masseleitung 31 und der Versorgungsspannungsleitung 32 wird von der Einheit 12 gesteuert, welche Masse und die Betriebsspannung (in der Regel 12 Volt) empfängt. Die Steuereinheit 12 enthält in der Regel eine elektronische Steuereinrichtung (Controller), die die Ansteuerung der Masseleitung 31 und der Versorgungsspannungsleitung 32 in Abhängigkeit von verschiedenen Steuersignalen vornimmt. Die Steuersignale können beispielsweise Signale vom Zünd-Start-Schloß und die sogenannte "Klemme 15" (Zündungsversorgungsleitung) 11 umfassen.

Die erfindungsgemäß weitergebildete Spannungsversorgungssteuereinheit 10 enthält außerdem eine Schaltung 13, die die Zündungsversorgungsleitung 11 (Klemme 15) empfängt und daraus ein Steuersignal ableitet, welches auf die Leitung 33 ausgegeben wird. Das auf Leitung 33 ausgegebene abgeleitete Steuersignal ist vorzugsweise dadurch gekennzeichnet, daß es dann, wenn die Zündungsversorgungsleitung auf Masse liegt (abgeschaltete Zündung), eine hohe Steuerspannung (beispielsweise 12 Volt) führt und dann, wenn die Zündungsversorgungsleitung 11 auf einer hohen Spannung (insbesondere 12 Volt) liegt, eine niedrige Spannung (vorzugsweise 0 Volt) führt. Das abgeleitete Steuersignal stellt somit logisch das invertierte Signal der Klemme 15 dar. Es ist bei einer Ausführungsform vorgesehen, daß das abgeleitete Steuersignal auf einem mittleren Pegel (beispielsweise 6 Volt) liegt, wenn die Klemme 15 einen ausgeschalteten Zustand der Zündung anzeigt (auf Masse liegt).

Die Verriegelungsbaugruppe 20 weist zunächst zwei Eingangsklemmen auf, an denen sie die Masse und die Versorgungsspannung von der Spannungsversorgungssteuereinheit 10 empfängt. Ferner weist die Verriegelungsbaugruppe 20 eine Motorbaugruppe 27 auf, die einen Stellmotor 21 enthält. Innerhalb der Verriegelungsbaugruppe 20 werden sowohl die Masse als auch die Versorgungsspannung, die von der Spannungsversorgungssteuereinheit 10 empfangen worden sind, an die Motorbaugruppe 27 weitergeleitet. Diese Weiterleitung erfolgt über Schalteinrichtungen, durch welche die Versorgung des Motors 21 mit Masse und Versorgungsspannung unterbrochen werden kann, wenn ein Verstellen des Motors vermieden werden soll. In der schematischen Darstellung der Fig. 1 ist eine direkt vom Eingangsanschluß der Verriegelungsbaugruppe 20 zu der Motorbaugruppe 27 führende Spannungsversorgungsleitung gezeigt, während die Masse vom Eingangsanschluß an Leitung 31 über einen Schalter 23 zur Motorbaugruppe 27 geführt wird. Bei alternativen Ausführungsformen können selbstverständlich weitere Schalteinrichtungen zwischen den Masse/Versorgungsspannungs-Eingangsanschlüssen und die Motorbaugruppe 27 eingekoppelt sein. Im Rahmen der Erfindung ist aber lediglich die Masse-Versorgungs-Schalteinrichtung 23 relevant, die in geschlossenem Zustand ein Massepotential über Leitung 22 an die Motorbaugruppe 27 und somit den Verriegelungsmotor 21 weiterleitet.

Die Verriegelungsbaugruppe 20 enthält einen Mikrocontroller, der die Steuersignale für die gewünschte Ansteuerung der Motorbaugruppe 27 erzeugt. Ferner enthält die Verriegelungsbaugruppe 20 eine Steuerschaltung 24, die ein Ansteuersignal für die Schalteinrichtung 23 erzeugt. Die Steuerschaltung 24 ist über mehrere Leitungen mit dem Mikrocontroller 25 gekoppelt, um von diesem Steuersignale zu empfangen und an den Mikrocontroller Signale auszugeben, die bestimmte Zustände der Steuerschaltung 24 anzeigen. Der Mikrocontroller 25 empfängt (in Fig. 1 nicht dargestellte) Steuersignale, die gewünschte Verriegelungs- und Entriegelungsoperationen anzeigen. Diese Steuersignale, die auch als Datensignale bezeichnet werden, sind vorzugsweise verschlüsselt, so daß Entriegelungs/Verriegelungsoperationen nur bei richtiger Codierung der Datensignale veranlaßt werden. Darüber hinaus kann der Mikrocontroller auch Ausgabesignale erzeugen und aus der Verriegelungsbaugruppe 20 ausgeben, die bestimmte Verriegelungszustände anzeigen. Das Zusammenwirken von Mikrocontroller 25 und Motorbaugruppe 27 beim Entriegeln oder Verriegeln der Lenkungsverriegelung soll hier nicht näher beschrieben werden, da diese Details für das Verständnis der vorliegenden Erfindung nicht wesentlich sind.

Erfindungsgemäß weist die Steuerschaltung 24 einen zusätzlichen Eingangsanschluß 26 auf, an dem das von der Zündungsversorgungsleitung 11 innerhalb der Spannungsversorgungssteuereinheit 10 abgeleitete Steuersignal, welches auf Leitung 33 anliegt, angelegt wird. Der Eingangsanschluß 26 ist insofern ein zusätzlicher, als er zu den üblichen Eingangsanschlüssen der Steuerschaltung 24, die mit dem Mikrocontroller 25 verbunden sind, hinzugefügt wird. Die Steuerschaltung 24 ist so ausgebildet, daß sie ein die Schalteinrichtung 23 öffnendes Ansteuersignal erzeugt, wenn die Spannung an dem zusätzlichen Eingangsanschluß 26 nicht auf der hohen Spannung liegt, die die ausgeschaltete Zündung anzeigt. Die Steuerschaltung 24 erzeugt insbesondere dann ein die Schalteinrichtung 23 öffnendes Ansteuersignal, wenn entweder der Eingangsanschluß 26 über Leitung 33 mit Massepotential beaufschlagt wird (was eine eingeschaltete Zündung anzeigt) oder der Eingangsanschluß 26 versehentlich zu Masse kurzgeschlossen wurde oder leerläuft (beispielsweise die Leitung 33 abgerissen ist). Bei einer Ausführungsform der Steuerschaltung 24 wird dies mit einer Transistoreingangsstufe erreicht, bei der die Basis eines Schalttransistors derart mit dem Eingangsanschluß 26 gekoppelt ist, das der Transistor nur dann einschaltet, wenn der Eingangsanschluß 26 auf dem gewünschten hohen Potential ist und einen ausreichenden Eingangsstrom empfängt. Die Transistoreingangsstufe der Steuerschaltung 24 erzeugt dann, beispielsweise über eine weitere Transistorstufe, ein Ansteuersignal, welches beispielsweise mit einem Gate eines Schalt-Feldeffekttransistors in der Schalteinrichtung 23 gekoppelt wird.

Es sind eine Vielzahl von Ausführungsformen der Steuerschaltung 24 denkbar, die ein Ansteuersignal für ein Gate eines Schalttransistors in der Schalteinrichtung 23 in Abhängigkeit von sowohl Ausgangssignalen des Mikrocontrollers 25 als auch dem abgeleiteten Steuersignal auf Leitung 33 erzeugen können. Bei der bevorzugten Ausführungsform ist die Steuerschaltung 24 so ausgebildet, daß sie nur bei vorgegebener hoher Spannung am Eingangsanschluß 26 und den richtigen Steuersignalen vom Mikrocontroller 25 und darüber hinaus nur bei intakten Transistorbauelementen der Steuerschaltung dasjenige Ansteuersignal erzeugt, das die Schalteinrichtung 23 schließt und somit die Masseversorgung für die Baugruppe 27 herstellt. Zusätzlich kann die Eingangsschaltung der Steuerschaltung 24 einen Überspannungsschutz und eine Eingangsstrombegrenzungsschaltung umfassen.

## Patentansprüche

1. Elektronische Lenkungsverriegelung mit einer Spannungsversorgungssteuereinheit (10) und einer Verriegelungsbaugruppe (20), wobei die Spannungsversorgungssteuereinheit (10) die Spannungsversorgung für die Verriegelungsbaugruppe (20) über eine Masse-Versorgungsleitung (31) und eine Versorgungsspannungsleitung (32) zur Verfügung stellt, wobei die Verriegelungsbaugruppe (20) von der Spannungsversorgungssteuereinheit (10) nur dann mit der Versorgungsspannung und Masse versorgt wird, wenn auf einer Zündungsversorgungsleitung (11) eine Spannung gegenüber Masse anliegt, die eine ausgeschaltete Zündung anzeigt,
wobei die Verriegelungsbaugruppe (20) einen Verriegelungsmotor (21) aufweist und diesen mit der Versorgungsspannung und der Masse versorgt, wobei die Masse-Versorgung (22) des Verriegelungsmotors (21) über eine Masse-Versorgungs-Schalteinrichtung (23) zur Verfügung gestellt wird, wobei die Verriegelungsbaugruppe (20) ferner eine Steuerschaltung (24) umfaßt, die die Masse-Versorgungs-Schalteinrichtung (23) ansteuert,
wobei die Steuerschaltung (24) einen zusätzlichen Eingangsanschluß (26) aufweist, an dem ein von der Zündungsversorgungsleitung (11) abgeleitetes Steuersignal anliegt, wobei die Steuerschaltung (24) dann, wenn die Spannung an dem zusätzlichen Eingangsanschluß (26) eine eingeschaltete Zündung anzeigt, ein die Masse-Versorgungs-Schalteinrichtung (23) öffnendes Ansteuersignal erzeugt.

2. Elektronische Lenkungsverriegelung nach Anspruch 1, **dadurch gekennzeichnet, daß** das von der Zündungsversorgungsleitung (11) abgeleitete Steuersignal sich auf einen niedrigen Spannungspegel, vorzugsweise auf Masse, befindet, wenn die Zündungsversorgungsleitung (11) auf einem hohen Spannungspegel, beispielsweise auf 12 V, liegt, und daß die Steuerschaltung (24) das die Masse-Versorgungs-Schalteinrichtung (23) öffnende Ansteuersignal erzeugt, wenn der zusätzliche Eingangsanschluß (26) auf einer niedrigen Spannung liegt.

3. Elektronische Lenkungsverriegelung nach Anspruch 2, **dadurch gekennzeichnet, daß** die Steuerschaltung (24) das die Masse-Versorgungs-Schalteinrichtung (23) öffnende Ansteuersignal auch dann erzeugt, wenn der zusätzliche Eingangsanschluß (26) unbeschaltet oder offen ist.

4. Elektronische Lenkungsverriegelung nach Anspruch 3, **dadurch gekennzeichnet, daß** das von der Zündungsversorgungsleitung (11) abgeleitete Steuersignal sich auf einem vorgegebenen Pegel, der zwischen Masse und der maximalen Spannung liegt, befindet, wenn die Zündungsversorgungsleitung auf Masse liegt, und daß die Steuerschaltung (24) das die Masse-Versorgungs-Schalteinrichtung (23) öffnende Ansteuersignal nur dann nicht erzeugt, wenn der zusätzliche Eingangsanschluß auf dem vorgegebenen Pegel liegt.

5. Elektronische Lenkungsverriegelung nach einem der Ansprüche 1 bis 4, **dadurch gekennzeichnet, daß** das von der Zündungsversorgungsleitung (11) abgeleitete Steuersignal in der Spannungsversorgungssteuereinheit (10) erzeugt wird und ein die Masse-Versorgungsleitung (31), die Versorgungsspannungsleitung (32) und eine das abgeleitete Steuersignal führende Leitung (33) in einem Kabelbaum (30) von der Spannungsversorgungssteuereinheit (10) zu der Verriegelungsbaugruppe (20) geführt sind.

6. Elektronische Lenkungsverriegelung nach einem der Ansprüche 1 bis 5, **dadurch gekennzeichnet, daß** die Steuerschaltung (24) wenigstens ein Signal an einen Controller (25) der Verriegelungsbaugruppe (20) ausgibt, das von dem an dem zusätzlichen Eingangsanschluß (24) anliegenden Steuersignal abgeleitet ist und dessen Zustand anzeigt.

7. Elektronische Lenkungsverriegelung nach einem der Ansprüche 1 bis 6, **dadurch gekennzeichnet, daß** die Steuerschaltung (24) eine Schutzschaltung gegen Überspannungen an dem zusätzlichen Eingangsanschluß (26) aufweist.

8. Elektronische Lenkungsverriegelung nach einem der Ansprüche 1 bis 7, **dadurch gekennzeichnet, daß** strombegrenzende Mittel mit dem Steuersignal gekoppelt sind, die in einem Fehlerfall einen Steuersignal-Strom auf eine vorgegebene Stromstärke begrenzen.

9. Elektronische Lenkungsverriegelung nach Anspruch 8, **dadurch gekennzeichnet, daß** die strombegrenzenden Mittel in der Steuerschaltung (24) integriert sind.

10. Elektronische Lenkungsverriegelung nach einem der Ansprüche 1 bis 9, **dadurch gekennzeichnet, daß** die Masse-Versorgungs-Schalteinrichtung (23) einen Schalttransistor umfaßt, der bei anliegendem Ansteuersignal gesperrt ist.

11. Elektronische Lenkungsverriegelung nach Anspruch 10, **dadurch gekennzeichnet, daß** der Schalttransistor ein das Ansteuersignal empfangendes Gate aufweist, wobei das mit dem Gate gekoppelte Ansteuersignal anliegt, wenn es in der Nähe des Massepotentials liegt.

## Claims

1. An electronic steering lock with a voltage supply control unit (10) and a locking assembly (20), wherein the voltage supply control unit (10) provides the supply voltage for the locking assembly (20) via a ground supply line (31) and a supply voltage line (32), whereby the locking assembly (20) is only supplied with the supply voltage and ground by the voltage supply control unit when a voltage with respect to ground is present on an ignition supply line (10), which indicates that the ignition is switched off, wherein the locking assembly (20) includes a locking motor (21) and supplies the latter with the supply voltage and ground, whereby the ground supply (22) of the locking motor (21) is provided via a ground supply switching device (23), whereby the locking assembly (20) further includes a control circuit (24), which controls the ground supply switching circuit (23), wherein the control circuit (24) includes an additional input connection (26), which is subjected to a control signal derived from the ignition supply line (11), whereby when the voltage on the additional input connection (26) indicates that the ignition is switched on, the control circuit (24) produces a control signal which opens the ground supply switching device (23).

2. An electronic steering lock as claimed in claim 1, **characterised in that** the control signal derived from the ignition supply line (11) is at a low voltage level, particularly at ground, when the ignition supply line (11) is at a high voltage level, for instance at 12V, and that the control circuit (24) produces the control signal which opens the ground supply switching device (23) when the additional input connection (26) is at a low voltage.

3. An electronic steering lock as claimed in claim 2, **characterised in that** the control circuit (24) also produces the control signal which opens the earth supply switching device (23) when the additional input connection (26) is unconnected or open.

4. An electronic steering lock as claimed in claim 3, **characterised in that** the control signal derived from the ignition supply line (11) is at a predetermined level, which lies between ground and the maximum voltage, when the voltage supply line is at ground potential, and that the control circuit (24) does not produce the control signal which opens the ground supply switching device (23) only when the additional input connection is at the predetermined level.

5. An electronic steering lock as claimed in one of claims 1 to 4, **characterised in that** the control signal derived from the ignition supply line (11), is produced in the voltage supply control unit (10) and the ground supply line (31), the supply voltage line (32) and a line (33), which carries the derived control signal, extend in a wiring harness (30) from the voltage supply control unit (10) to the locking assembly (20).

6. An electronic steering lock as claimed in one of claims 1 to 5, **characterised in that** the control circuit (24) issues at least one signal to a controller (25) of the locking assembly (20) which is derived from the control signal at the additional input connection (24) and indicates its state.

7. An electronic locking device as claimed in one of claims 1 to 6, **characterised in that** the control circuit (24) includes a protective circuit against over voltages on the additional input connection (26).

8. An electronic steering lock as claimed in one of claims 1 to 7, **characterised in that** current-limiting means are coupled to the control signal which, in the event of trouble, limit a control signal current to a predetermined current intensity.

9. An electronic steering lock as claimed in claim 8, **characterised in that** the current-limiting means are integrated into the control circuit (24).

10. An electronic steering lock as claimed in one of claims 1 to 9, **characterised in that** the ground supply switching device (23) includes a switching transistor, which is disabled when the control signal is applied.

11. An electronic steering lock as claimed in claim 10, **characterised in that** the switching transistor includes a gate which receives the control signal, whereby the control signal coupled to the gate is present when it is in the region of the ground potential.

## Revendications

1. Verrouillage de direction électronique avec une unité de commande d'alimentation en tension (10) et un bloc de verrouillage (20), dans lequel l'unité de commande d'alimentation en tension (10) fournit l'alimentation en tension pour le bloc de verrouillage (20) via une ligne d'alimentation à la masse (31) et une ligne de tension d'alimentation (32), dans lequel le bloc de verrouillage (20) de l'unité de commande d'alimentation en tension (10) n'est alimenté par la tension d'alimentation et la masse que si, sur une ligne d'alimentation d'allumage (11), on applique une tension par rapport à la masse qui indique un allumage déconnecté,
dans lequel le bloc de verrouillage (20) présente un moteur de verrouillage (21) et alimente celui-ci avec la tension d'alimentation et la masse, l'alimentation à la masse (22) du moteur de verrouillage (21) étant fournie via un dispositif de commutation d'alimentation à la masse (23), dans lequel le bloc de verrouillage (20) comprend en outre un circuit de commande (24) qui amorce le dispositif de commutation d'alimentation à la masse (23),
dans lequel le circuit de commande (24) présente une connexion d'entrée supplémentaire (26), sur laquelle est appliqué un signal de commande tiré de la ligne d'alimentation d'allumage (11), et dans lequel le circuit de commande (24) génère un signal d'amorçage ouvrant le dispositif de commutation d'alimentation à la masse (23), lorsque la tension sur la connexion d'entrée supplémentaire (26) indique un allumage activé.

2. Verrouillage de direction électronique selon la revendication 1, **caractérisé en ce que** le signal de commande tiré de la ligne d'alimentation d'allumage (11) se situe à un faible niveau de tension, de préférence à la masse, si la ligne d'alimentation d'allumage (11) se situe à un niveau de tension élevé, notamment à 12 V, et **en ce que** le circuit de commande (24) génère le signal d'amorçage ouvrant le dispositif de commutation d'alimentation à la masse (23), si la connexion d'entrée supplémentaire (26) se situe à une faible tension.

3. Verrouillage de direction électronique selon la revendication 2, **caractérisé en ce que** le circuit de commande (24) génère également le signal d'amorçage ouvrant le dispositif de commutation d'alimentation à la masse (23) lorsque la connexion d'entrée supplémentaire (26) est non connectée ou ouverte.

4. Verrouillage de direction électronique selon la revendication 3, **caractérisé en ce que** le signal de commande tiré de la ligne d'alimentation d'allumage (11) se situe à un niveau prédéterminé, qui se trouve entre la masse et la tension maximale, si la ligne d'alimentation d'allumage est à la masse, et **en ce que** le circuit de commande (24) ne génère le signal d'amorçage ouvrant le dispositif de commutation d'alimentation à la masse (23) que si la connexion d'entrée supplémentaire se situe au niveau prédéterminé.

5. Verrouillage de direction électronique selon l'une quelconque des revendications 1 à 4, **caractérisé en ce que** le signal de commande tiré de la ligne d'alimentation d'allumage (11) est généré dans l'unité de commande d'alimentation en tension (10) et la ligne d'alimentation à la masse (31), la ligne de tension d'alimentation (32) et une ligne (33) acheminant le signal de commande dérivé sont guidées dans un faisceau de câbles (30) de l'unité de commande d'alimentation en tension (10) au bloc de verrouillage (20).

6. Verrouillage de direction électronique selon l'une quelconque des revendications 1 à 5, **caractérisé en ce que** le circuit de commande (24) délivre au moins un signal à une unité de contrôle (25) du bloc de verrouillage (20), qui est tiré du signal de commande appliqué à la connexion d'entrée supplémentaire (24) et indique son état.

7. Verrouillage de direction électronique selon l'une quelconque des revendications 1 à 6, **caractérisé en ce que** le circuit de commande (24) présente un circuit de protection contre les surtensions à la connexion d'entrée supplémentaire (26).

8. Verrouillage de direction électronique selon l'une quelconque des revendications 1 à 7, **caractérisé en ce que** des moyens limiteurs de courant sont couplés au signal de commande et, en cas de panne, limitent un courant de signal de commande d'intensité prédéterminée.

9. Verrouillage de direction électronique selon la revendication 8, **caractérisé en ce que** les moyens limiteurs de courant sont intégrés au circuit de commande (24).

10. Verrouillage de direction électronique selon l'une quelconque des revendications 1 à 9, **caractérisé en ce que** le dispositif de commutation d'alimentation à la masse (23) comprend un transistor de commutation, qui est bloqué lorsqu'un signal d'amorçage est appliqué.

11. Verrouillage de direction électronique selon la revendication 10, **caractérisé en ce que** le transistor de commutation présente une grille recevant le signal d'amorçage, le signal d'amorçage couplé à la grille étant appliqué s'il se situe au voisinage du potentiel de masse.
